# EUROPEAN PATENT SPECIFICATION

(11) **EP 2 927 861 B1**
(45) Date of publication and mention of the grant of the patent: **08.05.2019**
(21) Application number: 15161964.0
(22) Date of filing: 31.03.2015
(51) Int. Cl.: G06F 17/30

(54) **IN-MEMORY DATABASE SYSTEM FOR THE MANAGEMENT OF VARIANT CONFIGURATION OF A PRODUCT**
IN-MEMORY-DATENBANKENSYSTEM ZUR VERWALTUNG DER VARIANTENKONFIGURATION EINES PRODUKTS
SYSTÈME DE BASE DE DONNÉES EN MÉMOIRE POUR LA GESTION DE CONFIGURATION DE VARIANTES D'UN PRODUIT

(30) Priority: 31.03.2014 US 201414230912
(43) Date of publication of application: 07.10.2015
(73) Proprietor: SAP SE, 69190 Walldorf (DE)
(72) Inventor: Meyer, Petra, 69190 Walldorf (DE); Liesecke, Sven, 69190 Walldorf (DE); Gaertner, Nadine, 69190 Walldorf (DE)
(74) Representative: Richardt Patentanwälte PartG mbB

(56) References cited:
- US-A1- 2007 143 124
- US-A1- 2008 010 328
- US-A1- 2013 054 551
- US-B1- 6 594 642
- US-B1- 8 504 733
- FRANZ FÄRBER ET AL: "The SAP HANA Database - An Architecture Overview", IEEE DATA ENGINEERING BULLETIN, VOLUME 35, 1 March 2012 (2012-03-01), pages 1-6, XP055148167,
- Franz Färber ET AL: "SAP HANA Database - Data Management for Modern Business Applications", SIGMOD Record (Vol. 40, No. 4), 1 December 2011 (2011-12-01), pages 45-51, XP055079943, DOI: 10.1145/2094114.2094126 Retrieved from the Internet: URL:http://delivery.acm.org/10.1145/210000 0/2094126/p45-farber.pdf?ip=145.64.254.247 &id=2094126&acc=ACTIVE%20SERVICE&key=E80E9 EB78FFDF9DF.4D4702B0C3E38B35.4D4702B0C3E38 B35.4D4702B0C3E38B35&CFID=514682785&CFTOKE N=88974856&__acm__=1432645409_1ecfc0d3643d f6f128eac44b7ae86cb9 [retrieved on 2013-09-18]
- Anonymous: "In-memory database - Wikipedia", Wikipedia, 12 March 2014 (2014-03-12), pages 1-5, XP055363702, Retrieved from the Internet: URL:https://en.wikipedia.org/w/index.php?t itle=In-memory_database&oldid=599284083 [retrieved on 2017-04-11]
- Anonymous: "Column-oriented DBMS - Wikipedia", , 6 March 2014 (2014-03-06), pages 1-6, XP055363704, Retrieved from the Internet: URL:https://en.wikipedia.org/w/index.php?t itle=Column-oriented_DBMS&oldid=598438648 [retrieved on 2017-04-11]

## Description

### Technical field

This disclosure relates generally to real-time production management, in particular, to real-time management of list of materials needed for manufacturing of customized products in 24/7 manufacturing environment.

### Background

Many different products are offered for sale with numerous available features that define particular product variants. Historically, customers may have been offered features that were added to a standard product, or they may have been allowed certain feature omissions or substitutions. One customer may prefer to add air conditioning to a car as an "option" when air conditioning is not a standard product feature for example, while another customer may prefer a convertible car that omits the standard product's hard top. The manufacturer may decide that since few customers are likely to order convertible cars with air conditioning, that product variant may not be offered for sale. A potential customer who wanted such a product variant would therefore be disappointed, and a revenue opportunity may be missed.

The trend toward full customization of a product line has therefore become increasingly popular, along with more flexible manufacturing. The potentially very large number of product features that may specify particular product variants complicates information management for sales, engineering, and production. Variant configuration tools therefore help ensure that a particular product variant having the desired features may be provided. Such tools may prevent problems such as the specification of mutually exclusive product characteristics or product feature combinations that are not offered for sale or are not available for assembly or delivery at a given price or by a given schedule.

One aspect of variant configuration management is the preparation of a list of materials needed for manufacturing of a particular configuration of a customized product, which is a complete, formally structured list of all the lowest-level components needed to produce a particular product line, including all possible provided product variants. Preparation of a correct list of materials is an often difficult and time-consuming process. Rather than simply creating a separate list of materials for each of many possible variants/configurations, manufacturers may instead use configurable lists of materials that describe the required component parts for an entire product line as functions of specified product variant features. These functions can become quite complicated for fully customized products with many user-selectable features. A database may be needed to manage the mapping of the desired features that define the variant configuration and all the components that each variant requires.

In one database model of a configurable list of materials, a product feature, characteristic, specification of a product feature, specification value of a characteristic of a product may be used to distinguish one component part from another. A characteristic may be characterized by specifications such as component name and a component quantity. For example, a component name of "color" with a component quantity of "red" could distinguish one laptop computer case from another. Each component may have many characteristics, such as "left", "rear", "LED", and country of origin "Japan" for a particular car tail light. Each characteristic of each component may be used as part of a selection condition to identify the required components of a product variant. Although described above in terms of product assembly from component parts, configuration management issues may also arise in many other situations, and may involve different types of components, such as pieces of equipment, routings, documents, etc. Further, although selection conditions are familiar to consumers when choosing products, in this description selection conditions are used as exemplary cases of a more general object dependency. Evaluation of the possibly very complex object dependencies comprising various selection conditions for various product features and/or characteristics during configuration of manufacturing process and the manufacturing process itself, is very time critical. Thus the effective solution should minimize time interval between receiving a request to manufacture a customized product and execution of manufacturing of the customized product.

The US 8 504 733 B1 discloses a method of creating a subtree within a global tree including a plurality of nodes and disseminating a query, wherein the subtree is a subset of the global tree. The method comprises: determining a predicate condition for the subtree; disseminating the predicate condition to each of the plurality of nodes in the global tree, wherein each node in the global tree receives the disseminated predicate condition and evaluates itself to determine whether it satisfies the predicate condition, and the nodes in the global tree that satisfy the predicate condition belong to the subtree; for each of the plurality of nodes in the global tree, storing a subtree local value, wherein the subtree local value of a node in the global tree is an indication of whether the node in the global tree belongs to the subtree based at least on the predicate condition; for each parent node in the global tree, storing a subtree aggregate value, wherein the subtree aggregate value is determined from the subtree local value of the parent node and a subtree local value of each child node of the parent node, wherein the subtree aggregate value at each parent node in the global tree is determined by using an OR function to combine the subtree local value of the parent node and the subtree local value of each child node of the parent node; sequentially determining the subtree aggregate value at each node of the global tree from nodes at a lowest tier in the global tree to a root node at a root tier in the global tree; receiving a query for the subtree; and disseminating the query to only the nodes belonging to the subtree rather than to all of the nodes in the global tree. The step of determining the subtree aggregate value at each node comprises: determining whether the node satisfies the predicate condition; storing a subtree local value indicating whether the node satisfies the predicate condition; for each leaf node, determining the subtree aggregate value is its subtree local value; for each parent node, determining the subtree aggregate value by using an OR function to combine subtree aggregate values from any children nodes to the parent node and the subtree local value at the parent node, wherein the children nodes comprise any nodes in a lower tier in the global tree and directly connected to the parent node. Nodes in the subtree comprise nodes in a data center storing data center level metrics and the nodes are to respond to queries including attributes corresponding to the predicate condition. The plurality of nodes are nodes in an in-network data aggregation system, where data is aggregated along the global tree or the subtree and stored in a root node. The predicate condition comprises an attribute descriptor and a corresponding attribute value and a comparison operator. The US 2008/0010328 A1 discloses a method comprising the step of using a single query statement to retrieve a product configuration from a data set having a plurality of usage conditions, which comprises the steps of: converting a usage condition into a first normal form (e.g. disjunctive normal form) representation, minimizing said first normal form representation, transforming said minimized first normal form representation into a second normal form (e.g. conjunction normal form) representation, and storing said second normal form representation in said data set.

### Summary

Operand, as understood here, is an object of an operation, which can be an operation/operator of a programming language like mathematical operation, string operation, etc.
Specification of a component of a customized product is, as understood here, is a description of one or more of the characteristic features of the component. For instance, a component "wheel" can have two specifications: "diameter specification" = 1m and "weight specification" = 50 kg. The component and its specification(s) can be stored as a data entry in a database.

The disclosure generally describes a networked in-memory database system comprising a column-store database storing specifications of the components usable for manufacturing of the customized products. The system is configured to process requests to manufacture customized products, wherein the request comprises configurations of said customized product formulated as a dependency tree comprising Boolean expressions describing selection conditions for the components and their specifications needed for manufacturing of said customized product in one of disjunctive normal form (DNF) or conjunctive normal form (CNF), wherein branches of the dependency tree correspond to the various configurations of said customized product. The effectiveness of the system is based on a synergetic effect between a structure of data storage in the column-store database and algorithm described herein for processing of the requests. This synergetic effect enables real-time processing of the requests and translating of the requests into a manufacturing environment. The disclosure further describes a computer-implemented method for operating such a networked in-memory database system and a computer-readable media having an executable computer code stored thereon, which when executed by a computer processor controlling the networked in-memory database system causes the computer processor to execute the computer-implemented method.

It is an objective of embodiments of the invention to provide for a system configured to provide real-time assessment of requests for manufacturing of customized products and translate these requests into manufacturing environment in real-time as well. Further objectives of embodiments of the invention are to provide a computer-implemented method for real-time assessment of requests for manufacturing of customized products and translation of these requests into manufacturing environment in real-time as well and to provide a computer readable medium having stored thereon a computer executable program code, which when executed by a processor controlling the system causes the system to perform the computer-implemented method. Advantageous embodiments are described in the dependent claims.

According to one embodiment, the present invention relates to a networked in-memory database system for real-time control of manufacturing processes of customized products using at least one assembly tool having real-time controlling unit. The networked in-memory database system comprises: a column-store database, wherein specifications of the components usable for manufacturing of the customized products are stored in the column-store data-base, one or more first input-output ports for programming at least one of real-time controlling units of the assembly tools, the one or more first input-output ports being configured to support at least one real-time communication computer network protocol for communication with the real-time controlling units, one or more second input-output ports configured to support at least one secure messaging computer network protocol, a digital storage medium storing a processor-executable program code, and a computing device to execute the processor-executable program code in order to cause the computing device to execute the following steps of: receiving a request message via the second port using the secure messaging computer network protocol, the request message comprising a request to manufacture the customized product and its description, the description comprising configuration of said customized product signaled as a dependency tree comprising Boolean expressions describing selection conditions for the components and their specifications needed for manufacturing of said customized product in one of disjunctive normal form (DNF) or conjunctive normal form (CNF), wherein branches of the dependency tree correspond to the various configurations of said customized product; identifying expressions and the specifications being arguments of the expressions, wherein each of the expressions is either one of the Boolean expressions or a term of one of the Boolean expressions, wherein each of the terms comprises at least one operator of the each of the terms and all of the operands of the at least one operator, wherein a code fragment of the processor-executable program code which execution causes the computing device to execute the steps of the identifying the expressions is a declarative programming language processor-executable program code; calculating results of the expressions; aggregating the results as a single data column in the column-store database and aggregating the aggregation results as further single data columns in the column-store database, using a minimum function for evaluation of a result in an AND-group of an AND-node and a maximum function for evaluation of a result in a OR-group of an OR-Node in an alternating sequence ordered corresponding to the chosen normal form, wherein Boolean values TRUE and FALSE are represented in the data columns as one and zero respectively; identifying a set of the branches of the dependency tree, which have all Boolean expressions in their nodes of each of the branches of the set being equal to TRUE; extracting form one of the branches of the set the components and their specifications of the configuration corresponding to the one of the branches of the set; and programming the real-time controlling unit of at least one of the assembly tools to manufacture said customized product having the configuration corresponding to the one of the branches of the set, wherein the programming comprises generating instructions to use the extracted components and their specifications for the manufacturing of said customized product, wherein the programming is performed via the one or more first input-output ports using the at least one real-time communication computer network protocol.

According to another embodiment, the present invention relates to computer-implemented method for real-time control of manufacturing processes of customized products using a networked in-memory database system and at least one assembly tool having real-time controlling unit. The networked in-memory database system comprises: a column-store database, wherein specifications of the components usable for manufacturing of the customized products are stored in the column-store data-base, one or more first input-output ports for programming at least one of real-time controlling units of the assembly tools, the one or more first input-output ports being configured to support at least one real-time communication computer network protocol for communication with the real-time controlling units, one or more second input-output ports configured to support at least one secure messaging computer network protocol, a digital storage medium storing a processor-executable program code, and a computing device to execute the processor-executable program code in order to cause the computing device to execute the following steps of the computer-implemented method: receiving a request message via the second port using the secure messaging computer network protocol, the request message comprising a request to manufacture the customized product and its description, the description comprising a configuration of said customized product signaled as a dependency tree comprising Boolean expressions describing selection conditions for the components and their specifications needed for manufacturing of said customized product in one of disjunctive normal form (DNF) or conjunctive normal form (CNF), wherein branches of the dependency tree correspond to various configurations of said customized product; identifying expressions and the specifications being arguments of the expressions, wherein each of the expressions is either one of the Boolean expressions or a term of one of the Boolean expressions, wherein each of the terms comprises at least one operator of the each of the terms and all of the operands of the at least one operator, wherein a code fragment of the processor-executable program code which execution causes the computing device to execute the steps of the identifying the expressions is a declarative programming language processor-executable program code; calculating results of the expressions; aggregating the results as a single data column in the column-store database and aggregating the aggregation results as further single data columns in the column-store database, using a minimum function for evaluation of a result in an AND-group of an AND-node and a maximum function for evaluation of a result in a OR-group of an OR-Node in an alternating sequence ordered corresponding to the chosen normal form, wherein Boolean values TRUE and FALSE are represented in the data columns as one and zero respectively; identifying a set of the branches of the dependency tree, which have all Boolean expressions in their nodes of each of the branches of the set being equal to TRUE; extracting form one of the branches of the set the components and their specifications of the configuration corresponding to the one of the branches of the set; and programming the real-time controlling unit of at least one of the assembly tools to manufacture said customized product having the configuration corresponding to the one of the branches of the set, wherein the programming comprises generating instructions to use the extracted components and their specifications for the manufacturing of said customized product, wherein the programming is performed via the one or more first input-output ports using the at least one real-time communication computer network protocol.

According to another embodiment, the present invention relates to a computer readable medium having stored thereon a computer executable program code for execution by a computer processor controlling a computing device of a networked in-memory database system comprising, wherein execution of the instructions of the executable program code causes the computer processor controlling the computing device to perform the aforementioned computer-implemented method on the networked in-memory database system.

In the aforementioned embodiments, the effectiveness of the system is based on a synergetic effect between a structure of data storage in the column-store data-base and algorithm described therein for processing of the requests. This synergetic effect enables real-time processing of the requests and translating of the requests into a manufacturing environment.

In another embodiment each of the configurations has an assigned preference index of the each of the configurations, wherein the one of the branches of the set corresponds to the configuration having the highest preference index among other configurations which branches are comprised in the set.

This feature enables to select the configuration of the customized product which fits best the wishes of a client.
In another embodiment the execution of the processor-executable program code further causes the computing device to execute the following step of updating the column-store database; wherein the execution of the processor-executable program code causes the computing device to execute the following steps if the identified set is not empty: the extracting of the components and their specifications and the programming of the real-time controlling unit; wherein the execution of the processor-executable program code causes the computing device to repeat the execution of the following steps after the execution of the updating of the column-store database if the previously identified set is empty: the identifying of the expressions, the calculating of the results, and the identifying of the set after the execution of the updating of the column-store database.
This embodiment discloses features enabling to manufacture the customized product in a case, when there were no components in the database as it was specified in the request to manufacture a customize product. The request is processed once again after the update of the database. The content of updates may be determined by the need to enable manufacturing of the customized product specified in the requests.

In another embodiment a number of operands in any of the expressions is less than three.

This rule enables homogeneous discretization of the operations performed at each level of the dependency tree. As a result thereof time difference between processing of operations associated with different nodes of the same level in the dependency tree is minimized and time needed for evaluation of the entire dependency tree is reduced.

In another embodiment the identifying of the expressions and the specifications of the components being the arguments in the expressions comprises the following step of recasting the original dependency tree into the new dependency tree, wherein branch fragments of the branches of the original dependency tree are recast to incorporate as nodes expressions being terms of the Boolean expressions of the original dependency tree into the new dependency tree, wherein each separate branch fragment is selectively recast in one of DNF and CNF according to which normal form most reduces the number of Boolean expressions in the each separate branch fragment.

This embodiment is an example implementation of the aforementioned rule.

In another embodiment execution of each of the Boolean expressions in the original dependency tree represented by its respective terms in the respective branch fragment of the new dependency tree is equivalent to execution of said respective terms in said respective branch fragment of the new dependency tree.

This embodiment specifies another rule stating that modifications (i.e. translation of the Boolean expressions into the expressions for calculation, recasting of fragments of the branches of the dependency tree) do not change functioning of the dependency tree and its original form is correct. For instance the dependency tree does not specify components and/or features of the components which are not present in the database.

In another embodiment the execution of the processor-executable program code causes the computing device to execute simultaneously the calculating of the results of the expressions in the different branches and/or in different fragments of the branches.

This embodiment discloses example of parallel processing of different branches and/or fragments of branches.

In another embodiment the execution of the processor-executable program code causes the computing device to evaluate the results in the AND-groups or OR-groups simultaneously.

In another embodiment each of some of the Boolean expressions of the dependency tree comprises at least one of a non-fixed-value literal, a multi-valued literal, an in-list, and a variant table.

In another embodiment a declarative programming language of the declarative programming language processor-executable program code is one of the following declarative programming languages: Resource Description Framework (RDF) query description language (RDQL), SPARQL Protocol and RDF Query Language (SPARQL), Structured Query Language (SQL), or xBase.

### Figures

FIG. 1 is a diagram of a Boolean expression tree representing an object dependency in disjunctive normal form (DNF).
FIG. 2 is a diagram of a Boolean expression tree evaluation.
FIG. 3 is a diagram of a DNF selection condition joined with a concrete configuration and aggregation.
FIGs. 4A-4B are diagrams of DNF selection condition evaluation detail.
FIG. 5 is a flowchart of a method.
FIGs. 6A-6B are diagrams of a pure DNF tree in a standard format and a condensed format.
FIG. 7 is a diagram of a dependency tree representing a selection condition with non-fixed-value literals.
FIGs. 8A-8C are diagrams of dependency trees with non-fixed-value literals.
FIG. 9 is a diagram of a first generalization of a pure DNF tree into a dependency tree.
FIG. 10 is a diagram of a second generalization of the DNF tree into a dependency tree.
FIGs. 11A-11B are diagrams of a dependency tree with an in-list in a specific representation and a more general representation, according to an exemplary embodiment.
FIGs. 12A-12B are diagrams of a final general dependency tree with representations of special features used in variant configuration, and a diagram legend.
FIG. 13 is a diagram of a final general dependency tree denoting parallelization.
FIG. 14 is a diagram of an exemplary computer system and an assembly tool.
FIG. 15 is a flowchart of a method.

### Detailed description

As described more fully below, the system and the method disclosed permit improved evaluation of variant configuration using in-memory technology. Configuration data and a selection condition to be solved are inputs for the system and/or in the method. A processor may bring Boolean selection condition expressions into disjunctive normal form (DNF) in memory. DNF expressions comprise a set of OR operations applied to a set of AND operations applied to logically negatable literals. The processor may then join concrete configuration values with the DNF selection condition, and compare values. Afterwards it may aggregate the comparison results per AND-group with a minimum function, and may then aggregate those results per OR-group with a maximum function. The processor may then output results of the selection condition for a concrete configuration. SQL Script statements can be used for processing.

The algorithm of data processing may use conjunctive normal form (CNF) instead of disjunctive normal form. CNF expressions comprise a set of AND operations applied to a set of OR operations applied to logically negatable literals. DNF may be used as the default form as it fits customer data better in most cases. DNF typically lists available options in more human-intuitive form. However, it might be beneficial to cast data into both forms to see which is optimal, i.e., has the fewest number of expressions, so more complex literals may be combined into smaller ones. The literals may comprise fixed values that may be determined directly by comparisons, or in other cases the literals may be more general. In some other cases, determining the actual literal values may be a pre-processing step.

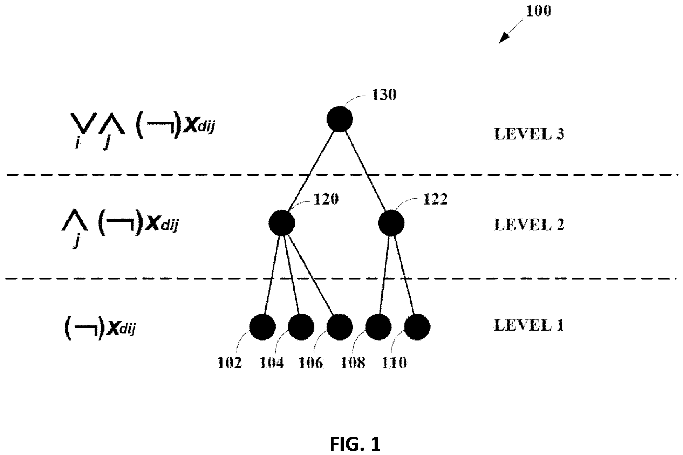

Referring now to FIG. 1, a diagram is shown of a Boolean expression tree 100 representing a selection condition in DNF. Selection conditions, which typically need to be evaluated quickly, may be modeled as or transformed into Boolean expressions. This will generally have been done already during maintenance of a selection condition or an object dependency. Class positions, which may be used instead of selection conditions, may also be transformed into Boolean expressions. Evaluation may be viewed conceptually as joining an in-memory database with the desired configuration.

Each such object dependency Boolean expression may be visualized as a tree 100 with three levels. The first level, referred to as Level 1 in FIG. 1, comprises a number of literals X_{dij} that are of the format C_{dij}=V_{dij}, where C_{dij} is a characteristic and V_{dij} is a characteristic value. Each literal of an object dependency expression, represented as exemplary items 102-110, represents the smallest concept of entry, and may be logically negatable. (In this description, true values are represented by a one and false values are represented by a zero, per convention.)

The second level of the tree comprises a set of j AND ("**^**") terms, shown as items 120 and 122, resulting from the evaluation of each corresponding group of literals in a DNF selection condition. That is, each AND term (such as item 120) is true if all of its child literals (such as items 102, 104, and 106) are fulfilled.

The third level of the tree comprises a set of i OR ("**v**") terms, shown as item 130, resulting from the evaluation of each corresponding group of AND terms in a DNF selection condition. That is, each OR term (such as item 130) is true if any of its AND terms (such as items 120 and 122) are fulfilled.

One benefit of the disjunctive normal form is that expressions may be evaluated easily by SQL. Each AND term result may be viewed as the minimum of the result of its related child nodes, and each OR term result may be viewed as the maximum of the result of its related child nodes. A set of Boolean expressions may thus be evaluated simultaneously and directly by an in-memory database with a few native selections. An example of an in-memory database is SAP's High Performance Analytics Appliance (HANA™) database, which may employ both row-based and column-based data storage. Embodiments of the present invention may therefore optimize the evaluation of object dependencies for column-based data storage, which is often much faster than row-based data storage for certain problems.

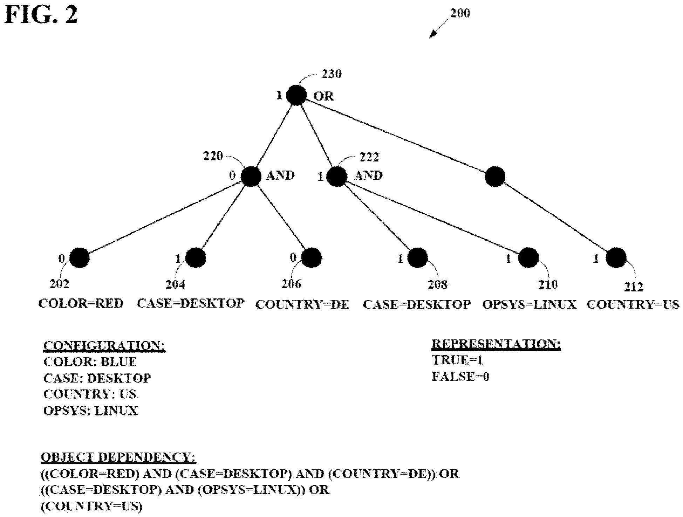

Referring now to FIG. 2, a diagram is shown of a Boolean expression tree 200 evaluation. In this example, a set of literals 202-212 describe characteristics of a computer, such as its color, type of case, country, and operating system. The selection condition is provided as a Boolean expression in DNF, with three literals (202, 204, and 206) for one AND term (220), and two literals for a second AND term (222). One literal (212) is alone, denoting that AND aggregations may be optional.

While literals 204, 208, 210, and 212 are true, the others (202 and 206) are not. The AND term 220 is false because at least one of its related child nodes (202, 204, and 206) is false. The AND term 222 is true because all of its related child nodes (208 and 210) are true. As a result, the OR term 230 is true because at least one of its related child nodes (212, 220, and 222) is true.

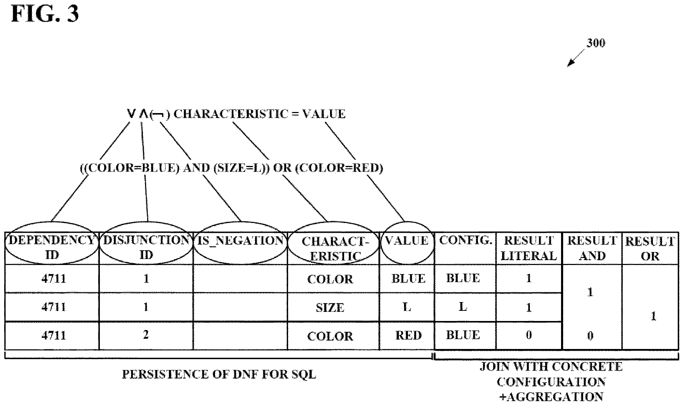

Referring now to FIG. 3, a diagram 300 is shown of a DNF selection condition joined with a concrete configuration and aggregation. In this case, the selection condition is ((COLOR=BLUE) AND (SIZE=L)) OR (COLOR=RED). The algorithm of the present invention uses the disjunctive normal form instead of the conjunctive normal form because the business application program's compilation of the selection condition syntax is already stored in DNF. Thus, the algorithm may efficiently derive the DNF for the SQL interpretation from the business application program's existing compilation.

FIG. 3 depicts the conceptual structure of the table that stores the DNF selection condition for SQL, and how the algorithm may join it with a concrete configuration to obtain a result. The persistence is shown in a table named "dependencies". The disjunction ID is introduced to group the literals (two, in this case) that are connected by AND. The concrete configuration desired is that COLOR=BLUE and SIZE=L. The result literal from the join is therefore true for characteristic values that match the configuration, and false for those characteristic values that do not match the configuration. The literals are then aggregated by AND and OR to produce a true result in this case.

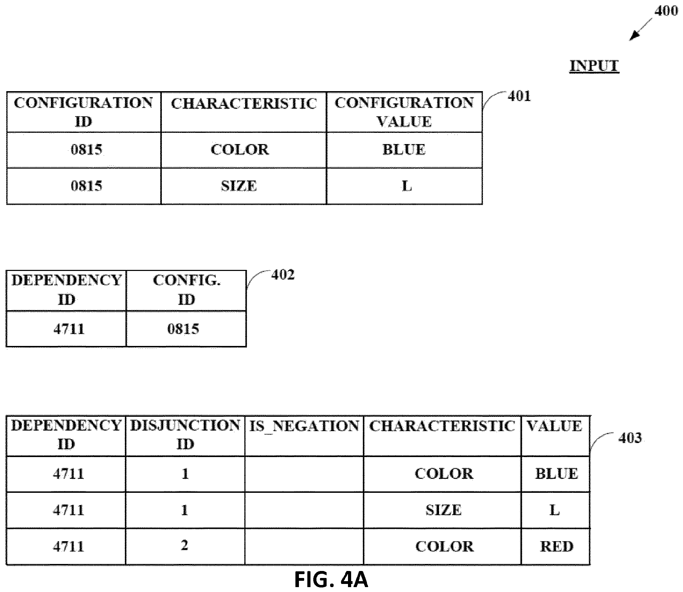

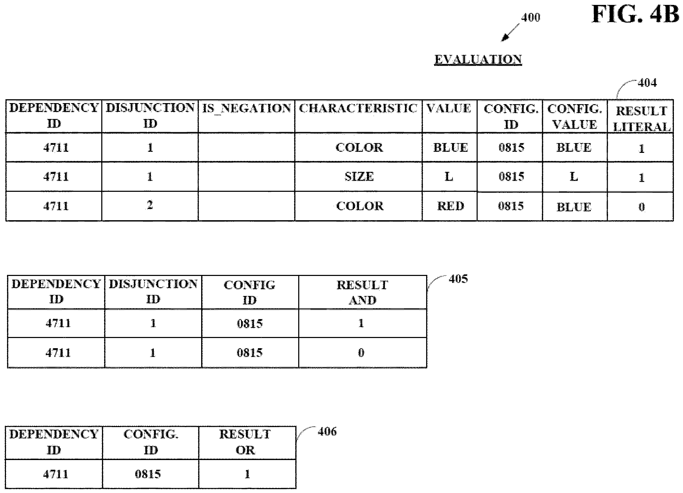

Referring now to FIGs. 4A-4B, a diagram 400 is shown of DNF selection condition evaluation detail. FIG. 4A depicts input tables required to perform the evaluation, while FIG. 4B depicts the evaluation of the inputs of FIG. 4A. Each of the tables shown depicts exemplary data storage operations that may be performed in sequence, corresponding to exemplary SQL Script statements provided herein. First, table 401 depicts an example configuration; the table's name is "configurations". Here, configuration ID #0815 has COLOR=BLUE and SIZE=L. Next, table 402 depicts an input table with a selection condition (specified by dependency ID #4711) and a configuration to be solved. Table 402's name is "toBeSolved". Table 403 represents the object dependency as it goes into the evaluation process.

Table 404 depicts a join of concrete configuration values with the selection condition in DNF, and a comparison of values. SQL Script statements that correspond to this table are provided here:

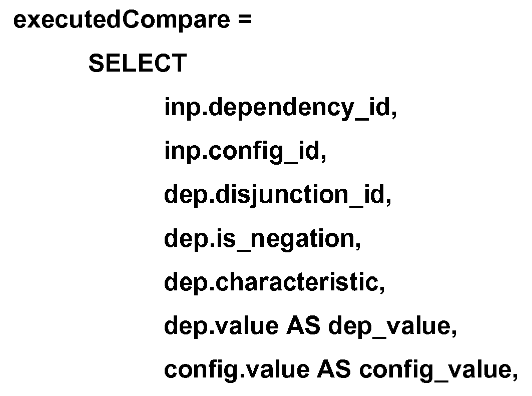

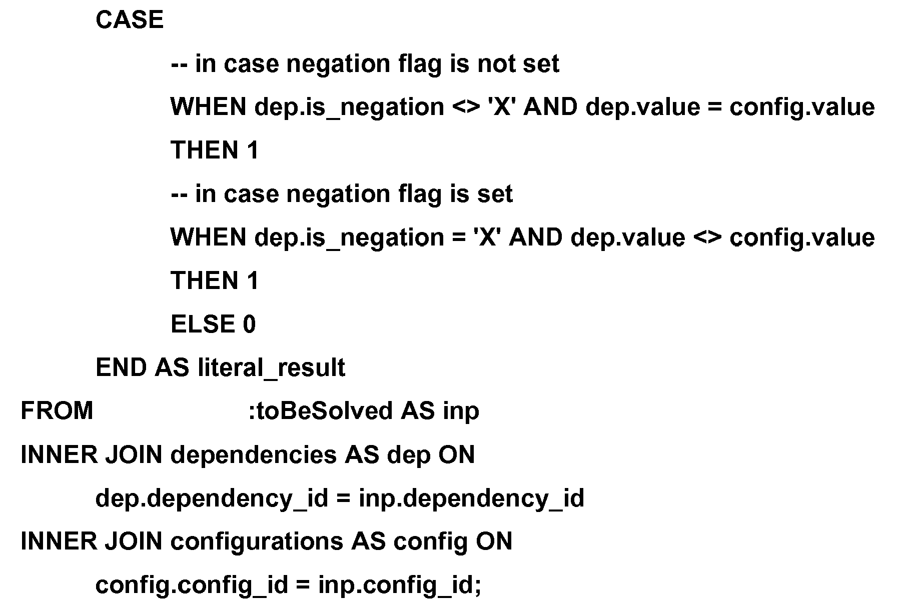

Table 405 depicts aggregation results per AND-group, with a minimum function. SQL Script statements that correspond to this table are provided here:

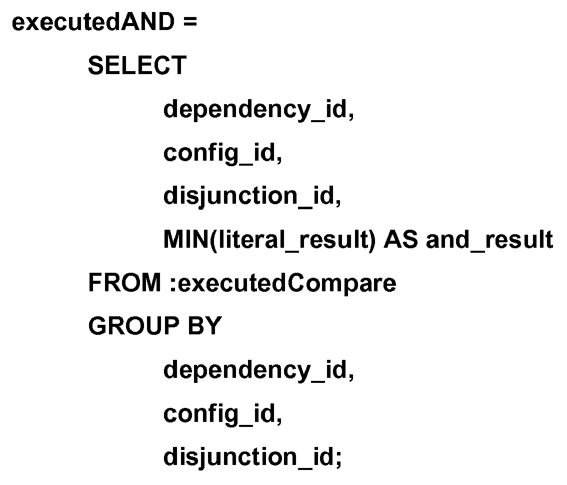

Table 406 depicts aggregation results per OR-group, with a maximum function. The result of the selection condition evaluation for the concrete configuration may be outputted by as a result of performing of an algorithm. SQL Script statements that correspond to this table are provided here:

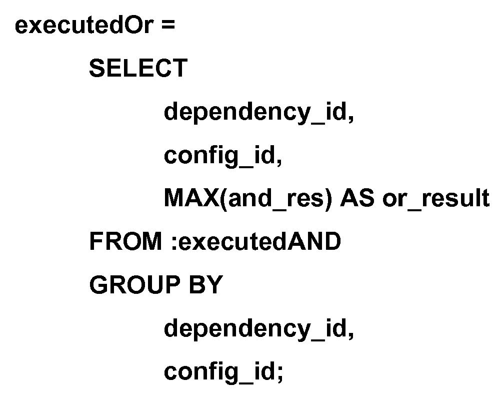

The aforementioned code examples and the code for evaluation of the dependency tree can be not only the Structured Query Language (SQL), but other declarative programming languages such as but are not limited to: Resource Description Framework (RDF) query description language (RDQL), SPARQL Protocol and RDF Query Language (SPARQL), and xBase.

In general, rule-evaluation systems, such as those that evaluate object dependencies, evaluate true/false conditions in sequence and therefore need to do so quickly because the rules to be evaluated may be very complex. In-memory databases are often set-based, designed for performing aggregations instead of calculations, for speed. Thus, arranging AND and OR combinations of literals, whether using DNF or CNF, is advantageous because converting expressions to these forms allows evaluations to be performed in two aggregation steps (one AND, one OR). Aggregations may be done in parallel in in-memory databases, taking further advantage of the fact that secondary storage I/O delays may be avoided. Even if the AND and OR operations cannot be parallelized, literal evaluation may be performed in parallel independent operations, followed by separate AND and OR aggregations.

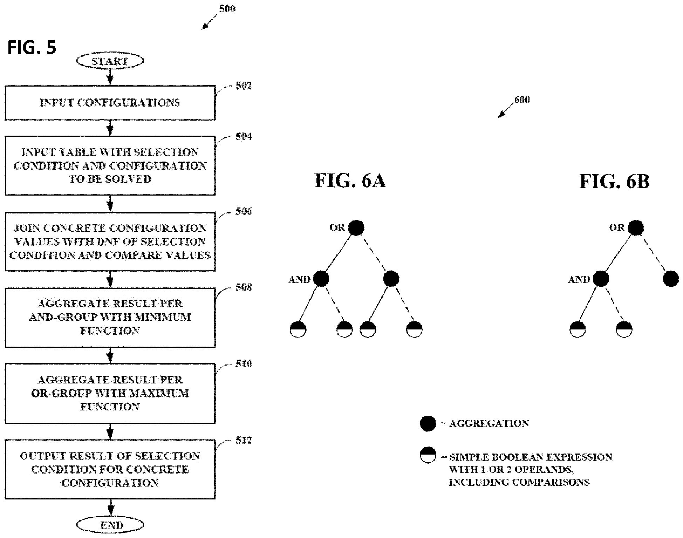

Referring now to FIG. 5, a flowchart 500 is shown comprising an exemplary method for implementation of the evaluating object dependency in in-memory databases described above. This method may be implemented by a processor executing instructions in a computer system, to be described, and the instructions may be tangibly embodied in a computer-readable medium or computer program product. The method execution may begin at 502 when the processor may receive input configurations, which may for example describe a possible product line. At 504, the processor may receive an input table with a particular selection condition and a desired configuration to be evaluated. The configuration may describe a product variant, and the selection condition may determine if the variant requires a particular component or is a variant that may be manufactured or sold or meets other requirements for a product line, for example.

At 506, the processor may join concrete configuration values with the selection condition (in DNF or CNF), and compare values. At 508, the processor may aggregate the results by AND-group with a minimum function (for the case where DNF is used). At 510, the processor may aggregate the results of the prior aggregation per OR-group with a maximum function (for the case where DNF is used). One of ordinary skill in the art will understand that when CNF is used, the aggregation order will be the opposite, i.e., first an aggregation per OR-group followed by an aggregation per AND-group. At 512, the processor may output the result of the selection condition for the concrete configuration.

In some cases, extensions of DNF may add new levels to the DNF tree to cover the special dependency syntax used in following additional scenarios, which are now each described in detail:
**General literals:** Literals form the leaves of the DNF tree. Strictly speaking, literals in the context of a pure DNF tree may only consist of simple Boolean comparisons. As previously noted, literals in a variant configuration dependency may be more general. For example, a comparison in a selection condition need not relate to a fixed value; there may also be comparisons between two characteristics, and there may be calculations involved, such as "LENGTH=WIDTH+3".

**Multiple values:** In the evaluation of variant configuration dependencies, the value of a characteristic is not necessarily unique since characteristics may have multiple values. For example, there may be a characteristic "extras" with values "air conditioning" and "special color" and a selection condition involving a literal "extras = air conditioning". Such literals may need to be evaluated for all values of the characteristic.

**In-lists:** Dependencies may offer a special syntax element called an "in-list" to describe a set and/or range of values. For example, a selection condition may involve the condition "SIZE IN {10, 21-23}" which evaluates true if the integer characteristic size is 10, 21, 22, or 23. Such a condition does not convert directly into a literal.

**Variant tables:** Dependencies may offer a special syntax element called a "variant table". Variant tables are lookup tables for selection conditions. They may have columns for the characteristics involved in the condition, and they may contain the evaluation of a selection condition for combinations of characteristics values. For example:

| **WIDTH** | **STRENGTH** | **HEIGHT** | |
|---|---|---|---|
| 10 | 20 | 20 | TRUE |
| 10 | 10 | 20 | TRUE |

Referring now to FIGs. 6A-6B, a pure DNF tree 600 is shown in FIG. 6A in the format previously shown and in FIG. 6B in a format using the following rules and simplifications for clarity:
- Aggregation nodes, whether aggregated over via AND or OR operators, are solid black circles.
- Operation nodes that represent an operation such as a comparison use a blackened-top-circle depiction. Operation nodes involve only a specific predetermined maximum number of operands. In some cases, operation nodes may involve either one or two operands, as fewer table columns lead to better performance in a particular in-memory database. However, this design choice also means that an operation that involves three or more operands may need to be split up artificially.
- Dotted lines indicate optional relationships.
- Aggregation nodes are depicted with two child nodes, but in general they may have any number of child nodes in an aggregation.
- Pruning: There is full symmetry in a purely DNF tree, meaning that all nodes of one level of the tree have the same structure. In this description, only the leftmost node for each level is depicted in its full structure. The other nodes to its right are abbreviated and their child nodes are omitted for clarity.

In the following description, the diagrams depict the generic form a dependency may take, and the extended tree is simply called the "dependency tree" to avoid confusion with a pure DNF tree.

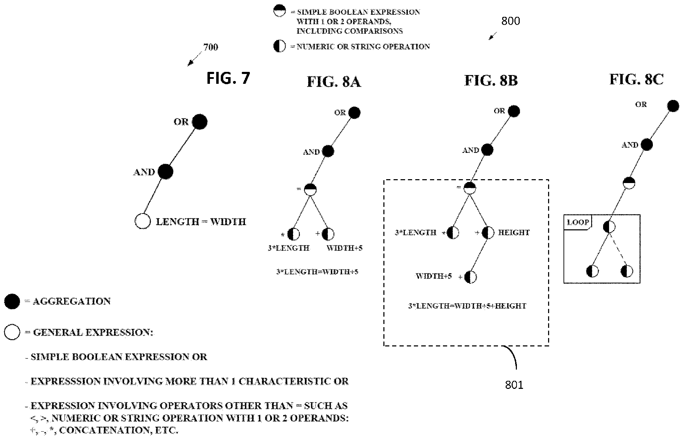

Referring now to FIG. 7, a dependency tree 700 is shown representing a selection condition with non-fixed-value literals. In this depiction, an open circle represents the more general literals used in dependencies, as a reminder of their increased scope compared to literals of a pure DNF tree. In this example, the dependency tree represents a selection condition "LENGTH=WIDTH", where length and width are characteristics. This example illustrates only a very simple literal used in a dependency, but literals may involve any number of steps and operands.

Referring now to FIGs. 8A-8C, dependency trees 800 with non-fixed-value literals are shown. FIG. 8A depicts a selection condition literal of the form "3*LENGTH=WIDTH+5." This literal may be decomposed into a simple Boolean expression (depicted with a blackened-top circle) that handles only the actual comparison, and child nodes (depicted with a blackened-side circle) may handle the separate determination of values "3*LENGTH" and "WIDTH+5".

FIG. 8B depicts a selection condition literal of the form "3*LENGTH=WIDTH+5+HEIGHT." The additional operand "HEIGHT" may be handled separately, due to the design choice of having a maximum of two operands per operation.

FIG. 8C depicts a dependency with nested complex operations that handle additional operands or operations through additional operation elements. Note that between the nested levels of the tree, there is no aggregation in this example. Instead, the output of one operation may be passed on as the input of the next higher level operation.

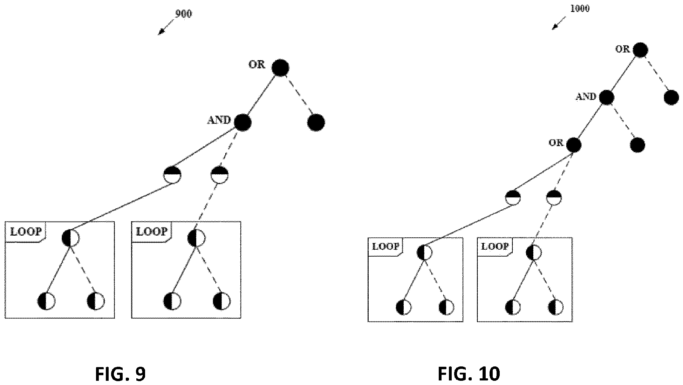

Referring now to FIG. 9, a first generalization 900 of the pure DNF tree into a dependency tree is shown. Generalization of the dependency tree enables orderly evaluation of more general literals and operations.

Referring now to FIG. 10, a second generalization 1000 of the DNF tree into a dependency tree is shown. This generalization considers extended literals and operations, as well as multi-valued characteristics. Multiple values of a characteristic lead to a multiplication of literals. In the example given above, characteristic "extras" has values "air conditioning" and "special color" and a selection condition demands "extras = air conditioning". In this example, the selection condition may be checked for each actual value of the characteristic. In this case, it is possible to perform two checks (i.e., with "air conditioning" and "special color") to determine if the selection condition is fulfilled.

In the language of DNF this action appears as an additional "OR" aggregation level. Since every characteristic may potentially have multiple values for the dependency tree, the embodiment may add another aggregation node just above the tree layer that deals with the characteristics. Aggregations are fast in in-memory technologies, so this approach is advantageous.

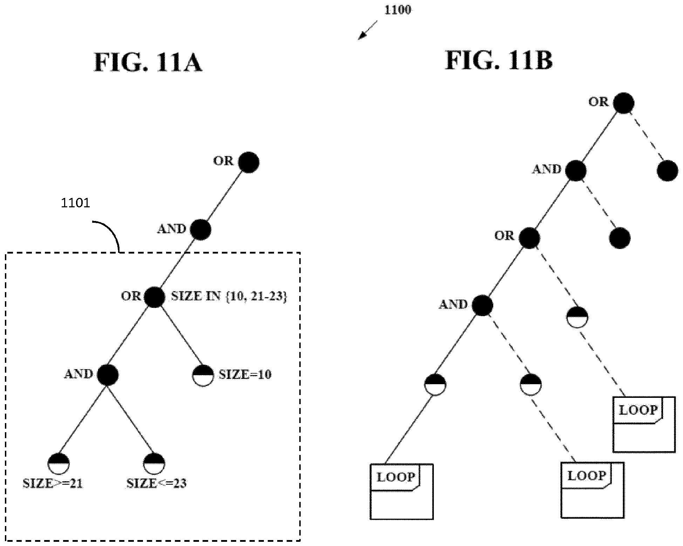

Referring now to FIGs. 11A-11B, a dependency tree 1100 with an in-list is shown in a specific and more general representation. In the example given above, the in-list "SIZE IN {10, 21-23}" may translate into a small DNF of its own: (size = 10) OR ((size >=21) AND (size <= 23)). Theoretically, this condition could be reflected in the already existing DNF structure in the dependency tree as shown in FIG. 11A, or by appending it at the bottom of the tree. However since the in-list is a feature used in the leaves of the dependency tree, reflecting the condition in the already existing DNF structure would greatly expand the data volume of the dependency tree due to the combinatorics involved.

One embodiment therefore adds another aggregation level into the dependency tree to evaluate the in-lists "locally" as leaves, rather than multiplying them into the DNF structure shown in FIG. 11A. Note that the OR aggregation level introduced to cover multi-value characteristics may be reused for the aggregation of in-lists.

FIG. 11B depicts a general form of a dependency tree with in-lists. The compressed loop box represents the nested operation tree as described previously. This generalization considers extended literals, operations, multi-valued characteristics, as well as in-lists.

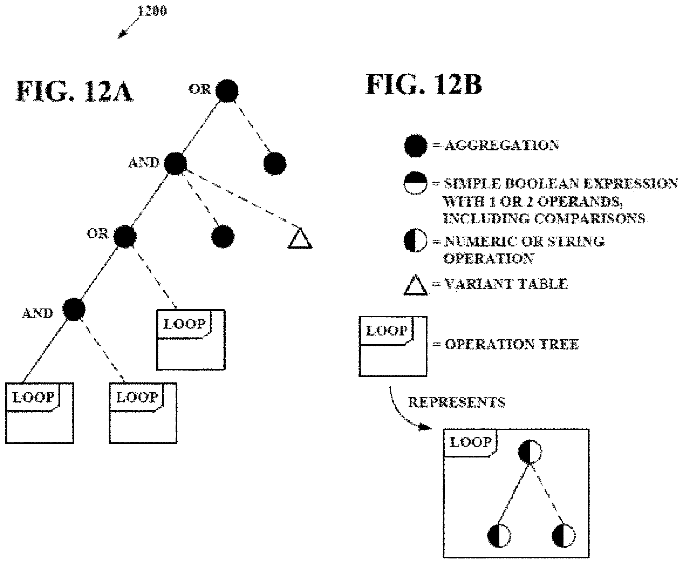

Referring now to FIG. 12A, a final general dependency tree 1200 with representations of special features used in variant configuration is shown. This dependency tree also integrates in variant tables, which are an alternative way of expressing a condition in a tabular overview rather than in dependency syntax. Theoretically, variant tables could be transformed and integrated into the existing DNF structure contained in the dependency tree. For similar reasons as for the in-list operator, in one case variant tables may be treated separately. In this example, the variant tables are evaluated separately and their result is merged with the results of the conditions that are provided in non-variant table syntax.

In FIG. 12A, the variant table evaluation is represented by a triangle symbol for the purpose of illustrating the structure of the dependency tree clearly. Note that for the integration of the variant table evaluation, in-lists cannot be combined with variant tables. It is therefore sufficient to consider variant tables at the first conjunction level (i.e., the "leaf level" of the original, underlying DNF tree). FIG. 12B is a legend summarizing the various representations described above in this description. The final general dependency tree contains representations of special features as used in variant configuration, including extended literals and operations, multi-valued characteristics, in-lists, and variant tables.

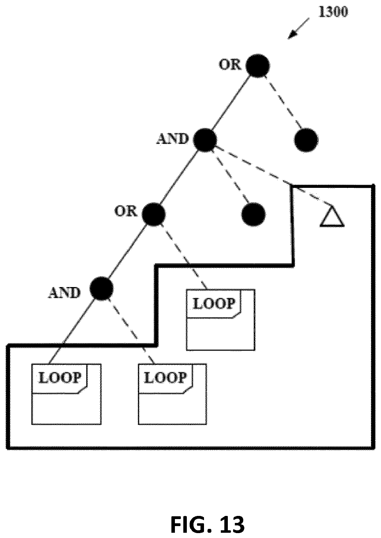

Referring now to FIG. 13, a final general dependency tree 1300 is shown denoting parallelization. Processing parallelization is possible in this case only at the leaves of the tree, shown within the enclosure. An additional level of parallelization may be implemented by separately processing dependencies involving string operations and those involving numeric operations. The separate processing comprises building up and evaluating separate, complete dependency trees as described above, with one for numerics and one for strings.

To summarize the extensions, in various examples mentioned above, the dependency tree may be literally grown from a standard DNF tree. Additional, variant configuration specific features may be incorporated by translating and integrating them into the pattern of conjunctive and disjunctive aggregations. Due to the alternating structure of disjunctions and conjunctions at different levels, the dependency tree may store conditions either in DNF or CNF. CNF may be implemented merely by skipping the first disjunction in the root node. While most of the dependency structure is best represented in DNF, some features such as in-lists tend to be closer to a conjunctive normal form.

The normal form representation used for individual dependencies and the features used therein may be optimized per dependency. The DNF and CNF dependency representations may be evaluated separately.

Note that due to the splitting up of arithmetic calculations into a separate "sub-tree" of the dependency representation the following situation may arise: A selection condition involves several branches connected with OR. One of these branches is immediately evaluated to "true", while another branch contains a sub-tree of arithmetic operations. An implementation that evaluates the calculation tree first, before the aggregation across the OR-branches happens, is inefficient. Thus, one it is possible to evaluate and aggregate all simple OR-branches, and may evaluate the complex OR-branches with calculations only if the simple ones evaluate as "false".

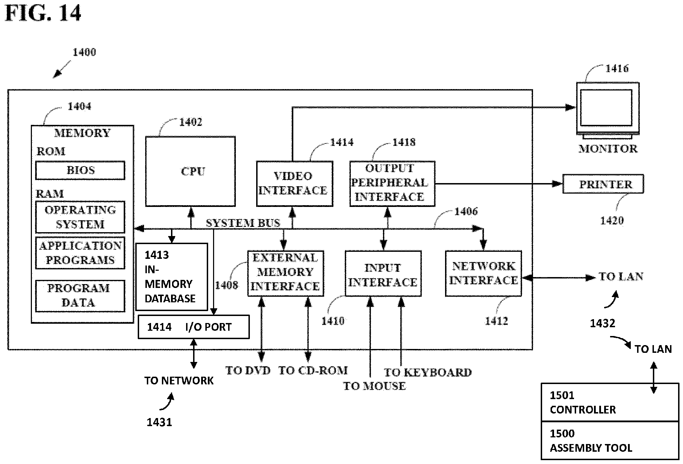

Referring now to FIG. 14, a computer system 1400 is shown comprising an exemplary structure for implementation of the examples/cases described above. The computer system can be a networked in-memory database system 1400 for real-time control of manufacturing processes of customized products using at least one assembly tool 1500 having real-time controlling unit 1501. Computer system 1400 comprises a central processing unit (CPU) or processor 1402 that processes data stored in memory 1404 (or digital storage medium 1404) exchanged via a system bus 1406 and/or data stored in a column-store database 1413 via the system bus 1406. Specifications of the components usable for manufacturing of the customized products can be stored in the column-store database 1413. The column-store database 1413 can be in-memory column-store database. Memory 1404 may include read-only memory, such as a built-in operating system, and random-access memory, which may include an operating system, application programs, program data, and a processor-executable program code which execution causes the computer system to perform at least one of the methods described above or further in the text. The computer system 1400 may also comprise an external memory interface 1408 to exchange data with a DVD or CD-ROM for example. Further, input interface 1410 may serve to receive input from user input devices including but not limited to a keyboard, a mouse, or a touchscreen (not shown). Network interface 1412 may allow external data exchange with a local area network (LAN) or other network, including the internet and/or industrial Ethernet for communication with the at least one of the assembly tools. The computer system can be configured to program the at least one of real-time controlling units of the assembly tools via network interface 1412 (or one or more first input-output ports 1412) supporting at least one real-time communication computer network protocol for communication with the real-time controlling units. The real-time communication computer network protocol can be but is not limited to: Real Time Messaging Protocol (RTMP) or MultiChannel Real-Time communication protocol (MCRT). The computer system 1400 may also comprise a video interface 1414 for displaying information to a user via a monitor 1416 or a touchscreen (not shown). An output peripheral interface 1418 may output computational results and other information to optional output devices including but not limited to a printer 1420 for example via an infrared or other wireless link. The computer system 1400 can also comprise one or more second input-output ports (1414) configured to support at least one secure messaging computer network protocol. The secure messaging computer network protocol can be but is not limited to: Secure Multipurpose Internet Mail Extensions (S/MIME) or Pretty Good Privacy (PGP). These input-output ports can be used for communication with clients, customers, etc. sending requests for manufacturing of customized products.

Computer system 1400 may comprise a mobile computing device such as a personal digital assistant or smartphone for example, along with software products for performing computing tasks. The computer system of FIG. 14 may for example receive program instructions, whether from existing software products or from embodiments of the present invention, via a computer program product and/or a network link to an external site.

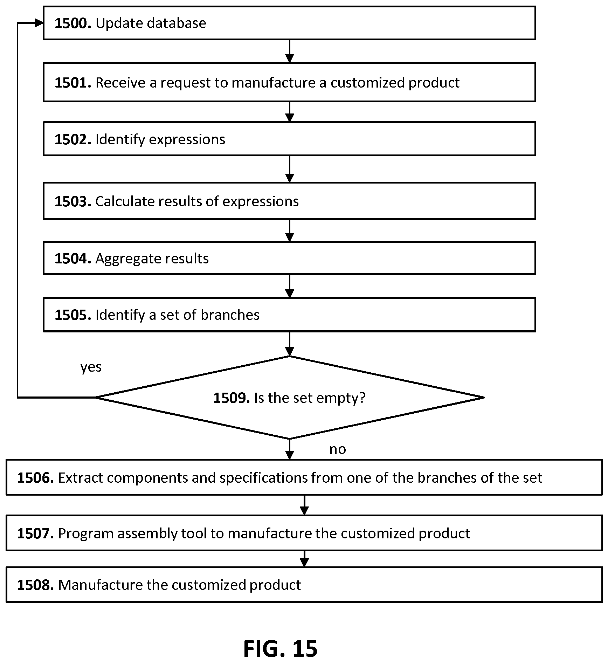

Fig. 15 is a flow chart of a method for real-time manufacturing of customized products. The method can begin either with a process block 1500 or with a process block 1501.

In a process block 1500 the in-memory column-store database 1413 storing specifications of the components usable for manufacturing of the customized products is updated. The update can comprise instructions to add new components and their specifications and/or delete components and their specifications which are no longer used. The update may be executed according to a schedule or immediately after the new components are delivered to a manufacturing facility where the assembly tools 1500 are installed.

The process block 1501 can be executed after the process block 1500. In this process block a request message is received via the second port 1414 using the secure messaging computer network protocol. The request message comprising a request to manufacture the customized product and its description. The description comprises a description of configurations of said customized product formulated as (signaled in the request message as) a dependency tree comprising Boolean expressions describing selection conditions for the components and their specifications needed for manufacturing of said customized product. The dependency tree is structured in one of disjunctive normal form (DNF) or conjunctive normal form (CNF), wherein branches of the dependency tree correspond to the various configurations of said customized product. The request message can comprise preference indexes of the configurations, wherein each of the configurations has a respective associated preference index of the each of the configurations. In this way a customer or a client who has sent the request can specify the preferred configuration. In case when manufacturing of several configurations appears to be possible then the configuration having the highest preference index is to be manufactured. Each of some of the Boolean expressions of the dependency tree can comprise at least one of a non-fixed-value literal, a multi-valued literal, an in-list, and a variant table.

A process block 1502 is executed after the process block 1501. In this process block expressions and the specifications being arguments of the expressions are identified. Each of the expressions is either one of the Boolean expressions or a term of one of the Boolean expressions. Each of the terms comprises at least one operator of the each of the fragments and all of the operands of the at least one operator. A code fragment of the processor-executable program code which execution causes the computing device to execute the steps of the identifying the expressions is a declarative programming language processor-executable program code. The declarative programming language can be but is not limited to: Resource Description Framework (RDF) query description language (RDQL), SPARQL Protocol and RDF Query Language (SPARQL), Structured Query Language (SQL), or xBase. The expressions can be generated in a way than a number of operands in any of them is less than three. Examples of identification of the expressions are described above in examples illustrated for instance on Fig. 4B, Figs. 8A-C, and Figs. 11A-11B.

The process of the identification of the expressions can comprise restructuring/recasting of the original dependency tree into a new dependency tree. In this process branch fragments of the branches of the original dependency tree are recast into new branch fragments 801, 1101 of the new dependency tree to incorporate as nodes expressions being terms of the Boolean expressions of the original dependency tree. Each separate branch fragment of the original tree is selectively recast in one of DNF and CNF (see e.g. fragment 1101) according to which normal form most reduces the number of Boolean expressions in the each separate new branch fragment. This way of recasting of the dependency tree does not change its logical functionality, i.e. execution of each of the Boolean expressions in the original dependency tree translated into its respective terms in the respective new branch fragment of the new dependency tree is equivalent to execution of said respective terms in said respective branch fragment of the new dependency tree.

A process block 1503 is executed after the process block 1502. In the process block results of the expressions are calculated. The results can be calculated in parallel in the different branches or in different fragments of the branches. This parallel processing is of course limited by the structure of the decision tree, i.e. the expression in the parent node cannot be calculated until all results of the expressions in its child nodes are calculated. However it is not always the case. For instance calculation of AND Boolean expression in the AND node does not require calculation of all expressions in the child nodes of said AND node. Indeed, if not all of the results of expressions in its child nodes are calculated, but the result of expression of one of its child nodes is already calculated and is equal to FALSE, then calculation of the not yet calculated results of expressions is the child nodes is no longer needed, because the result of the calculation of AND operator of the AND-node is already determined by one FALSE argument and is equal to FALSE.

A process block 1504 is executed after the process block 1503. In the process block 1504 the results are aggregated as a single data column in the column-store database. Afterwards the aggregated results are aggregated in the next single data column in the column-store database. This iteration process is repeated until the root node of the dependency tree is reached, wherein a minimum function is used for evaluation of a result in an AND-group of an AND-node and a maximum function is used for evaluation of a result in a OR-group of an OR-Node in an alternating sequence ordered corresponding to the chosen normal form, wherein Boolean values TRUE and FALSE are represented in the data columns as one and zero respectively. Utilization of minimum and maximum operators/functions instead of Boolean operators is better because they are executed faster than Boolean operators. Aggregation of results in columns enables a synergistic effect of acceleration of processing using the column-store database, because this type of databases has superior performance when performing analysis of data in separate columns. Moreover aggregation of data in different AND-groups in one column and/or OR-groups in another one column can be executed simultaneously by using, for instance, parallel processing.

A process block 1505 is executed after a process block 1504. In the process block 1504 a set of the branches of the dependency tree is identified. Each of the branches of the set has all Boolean expressions in its nodes equal to TRUE. This indicates that configurations corresponding to the branches of the set can be manufactured, because components needed for their manufacturing are present in the column-store database and have specifications as specified in the dependency tree. If the set comprises more than one branches, then the branch corresponding to the configuration having the highest preference index is selected for manufacturing.

A decision process block 1509 is executed after the process block 1505. It causes execution of a process block 1506 if the set is not empty, otherwise it causes repetitive execution of the process blocks 1501-1505 after execution of the process block 1500. When the set is empty it means that a customized product cannot be manufactured because there is no components needed for manufacturing of said products. Repetitive execution of the process blocks 1501-1505 can be performed after the missing components are delivered to a site where the assembly tools are deployed and the database is updated accordingly.

In the process block 1506 the components and their specifications of the (preferred) configuration corresponding to one of the branches of the set are extracted from the one of the branches of the set.

A process block 1507 is executed after the process block 1506. In the process block 1507 the computer system 1400 programs the real-time controlling unit 1501 of at least one of the assembly tools 1500 to manufacture the customized product having the (preferred) configuration corresponding to one of the branches of the set. The programming comprises generating instructions to use the extracted components and their specifications for the manufacturing of said customized product, wherein the programming is performed via the one or more first input-output ports 1412 using the at least one real-time communication computer network protocol. The process of programming may for instance comprise calibration and/or configuration of the assembly tool for manufacturing of the customized product.

A process block 1508 is executed after the process block 1507. In this process block said customized product is manufactured using at least one of the assembly tools 1500 according to the program in its (their) real-time controlling unit(s) 1501.

As used herein, the terms "a" or "an" shall mean one or more than one. The term "plurality" shall mean two or more than two. The term "another" is defined as a second or more. The terms "including" and/or "having" are open ended (e.g., comprising). Reference throughout this document to "one embodiment", "certain embodiments", "an embodiment" or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics may be combined in any suitable manner on one or more embodiments without limitation. The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

In accordance with the practices of persons skilled in the art of computer programming, embodiments are described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the embodiments are essentially the code segments to perform the necessary tasks. The non-transitory code segments may be stored in a processor readable medium or computer readable medium, which may include any medium that may store or transfer information. Examples of such media include an electronic circuit, a semiconductor memory device, a read-only memory (ROM), a flash memory or other non-volatile memory, a floppy diskette, a CD-ROM, an optical disk, a hard disk, a fiber optic medium, etc. User input may include any combination of a keyboard, mouse, touch screen, voice command input, etc. User input may similarly be used to direct a browser application executing on a user's computing device to one or more network resources, such as web pages, from which computing resources may be accessed.

## Claims

1. A networked in-memory database system (1400) for real-time control of manufacturing processes of customized products using at least one assembly tool (1500) having real-time controlling unit (1501), the networked in-memory database system comprising:
a column-store database (1413), wherein specifications of the components usable for manufacturing of the customized products are stored in the column-store data-base,
one or more first input-output ports (1412) for programming at least one of real-time controlling units of the assembly tools, the one or more first input-output ports being configured to support at least one real-time communication computer network protocol for communication with the real-time controlling units,
one or more second input-output ports (1414) configured to support at least one secure messaging computer network protocol,
a digital storage medium (1404) storing a processor-executable program code, and
a computing device (1402) to execute the processor-executable program code in order to cause the computing device to execute the following steps of:
receiving a request message via the second port using the secure messaging computer network protocol (1501), the request message comprising a request to manufacture the customized product and its description, the description comprising configurations of said customized product signaled as a dependency tree comprising Boolean expressions describing selection conditions for the components and their specifications needed for manufacturing of said customized product in one of disjunctive normal form (DNF) or conjunctive normal form (CNF), wherein branches of the dependency tree correspond to the various configurations of said customized product;
identifying expressions and the specifications being arguments of the expressions (1502), wherein each of the expressions is either one of the Boolean expressions or a term of one of the Boolean expressions, wherein each of the terms comprises at least one operator of the each of the terms and all of operands of the at least one operator, wherein a code fragment of the processor-executable program code which execution causes the computing device to execute the steps of the identifying the expressions is a declarative programming language processor-executable program code;
calculating results of the expressions (1503);
aggregating the results as a single data table column in the column-store database and aggregating the aggregation results as further single data table columns in the column-store database (1504), using a minimum function for evaluation of a result in an AND-group of an AND-node and a maximum function for evaluation of a result in a OR-group of an OR-Node in an alternating sequence ordered corresponding to the chosen normal form, wherein Boolean values TRUE and FALSE are represented in the data table columns as one and zero respectively;
identifying a set of the branches of the dependency tree (1505), which have all Boolean expressions in their nodes of each of the branches of the set being equal to TRUE;
extracting from one of the branches of the set the components and their specifications of the configuration corresponding to the one of the branches of the set (1506); and
programming the real-time controlling unit of at least one of the assembly tools to manufacture said customized product having the configuration corresponding to the one of the branches of the set, wherein the programming comprises generating instructions to use the extracted components and their specifications for the manufacturing of said customized product, wherein the programming is performed via the one or more first input-output ports using the at least one real-time communication computer network protocol (1507).

2. The networked in-memory database system of claim 1, wherein each of the configurations has an assigned preference index of the each of the configurations, wherein the one of the branches of the set corresponds to the configuration having the highest preference index among other configurations which branches are comprised in the set.

3. The networked in-memory database system of any one of the preceding claims, wherein the execution of the processor-executable program code further causes the computing device to execute the following step of:
updating the column-store database (1500);
wherein the execution of the processor-executable program code causes the computing device to execute the following steps if the identified set is not empty (1509): the extracting of the components and their specifications (1506) and the programming of the real-time controlling unit (1507);
wherein the execution of the processor-executable program code causes the computing device to repeat the execution of the following steps after the execution of the updating of the column-store database (1500) if the previously identified set is empty (1509): the identifying of the expressions (1502), the calculating of the results (1503), and the identifying of the set.

4. The networked in-memory database system of any one of the preceding claims, wherein a number of operands in any of the expressions is less than three.

5. The networked in-memory database system of any one of the preceding claims, wherein the identifying of the expressions and the specifications being the arguments of the expressions comprises the following step of:
recasting the dependency tree into a new dependency tree, wherein branch fragments of the branches of the dependency tree are recast (801, 1101) to incorporate as nodes expressions being terms of the Boolean expressions of the dependency tree into the new dependency tree, wherein each separate branch fragment is selectively recast in one of DNF and CNF (1101) according to which normal form most reduces the number of Boolean expressions in the each separate branch fragment.

6. The networked in-memory database system claim 5, wherein execution of each of the Boolean expressions in the original dependency tree represented by its respective terms in the respective branch fragment of the new dependency tree is equivalent to execution of said respective terms in said respective branch fragment of the new dependency tree.

7. The networked in-memory database system according to any one of the preceding claims, wherein the execution of the processor-executable program code causes the computing device to execute simultaneously the calculating of the results of the expressions in the different branches and/or in different fragments of the branches.

8. The networked in-memory database system according to any one of the preceding claims, wherein the execution of the processor-executable program code causes the computing device to evaluate the results in the AND-groups or OR-groups simultaneously.

9. The networked in-memory database system according to any one of the preceding claims, wherein each of some of the Boolean expressions of the dependency tree comprises at least one of a non-fixed-value literal, a multi-valued literal, an in-list, and a variant table.

10. The networked in-memory database system according to any one of the preceding claims, wherein a declarative programming language of the declarative programming language processor-executable program code is one of the following declarative programming languages: Resource Description Framework (RDF) query description language (RDQL), SPARQL Protocol and RDF Query Language (SPARQL), Structured Query Language (SQL), or xBase.

11. The networked in-memory database system according to any one of the preceding claims, wherein the calculating of the results comprises the following:
continuing execution of calculating the results of one of the AND-groups until one of the calculated results of the one of the AND-groups is equal to FALSE; and
after the continuing of the execution of the calculating of the results and if not all of the results of the one of the AND-groups are calculated yet assigning FALSE to each of the not yet calculated results of the one of the AND-groups.

12. A computer-implemented method for real-time control of manufacturing processes of customized products using a networked in-memory database system (1400) and at least one assembly tool (1500) having real-time controlling unit (1501), the networked in-memory database system comprising:
a column-store database (1413), wherein specifications of the components usable for manufacturing of the customized products are stored in the column-store data-base,
one or more first input-output ports (1412) for programming at least one of real-time controlling units of the assembly tools, the one or more first input-output ports being configured to support at least one real-time communication computer network protocol for communication with the real-time controlling units,
one or more second input-output ports (1414) configured to support at least one secure messaging computer network protocol,
a digital storage medium (1404) storing a processor-executable program code, and a computing device (1402) to execute the processor-executable program code in order to cause the computing device to execute the following steps of the computer-implemented method:
receiving a request message via the second port using the secure messaging computer network protocol (1501), the request message comprising a request to manufacture the customized product and its description, the description comprising configurations of said customized product signaled as a dependency tree comprising Boolean expressions describing selection conditions for the components and their specifications needed for manufacturing of said customized product in one of disjunctive normal form (DNF) or conjunctive normal form (CNF), wherein branches of the dependency tree correspond to the various configurations of said customized product;
identifying expressions and the specifications being arguments of the expressions (1502), wherein each of the expressions is either one of the Boolean expressions or a term of one of the Boolean expressions, wherein each of the terms comprises at least one operator of the each of the terms and all of the operands of the at least one operator, wherein a code fragment of the processor-executable program code which execution causes the computing device to execute the steps of the identifying the expressions is a declarative programming language processor-executable program code;
calculating results of the expressions (1503);
aggregating the results as a single data table column in the column-store database and aggregating the aggregation results as further single data table columns in the column-store database (1504), using a minimum function for evaluation of a result in an AND-group of an AND-node and a maximum function for evaluation of a result in a OR-group of an OR-Node in an alternating sequence ordered corresponding to the chosen normal form, wherein Boolean values TRUE and FALSE are represented in the data table columns as one and zero respectively;
identifying a set of the branches of the dependency tree (1505), which have all Boolean expressions in their nodes of each of the branches of the set being equal to TRUE;
extracting from one of the branches of the set the components and their specifications of the configuration corresponding to the one of the branches of the set (1506); and
programming the real-time controlling unit of at least one of the assembly tools to manufacture said customized product having the configuration corresponding to the one of the branches of the set, wherein the programming comprises generating instructions to use the extracted components and their specifications for the manufacturing of said customized product, wherein the programming is performed via the one or more first input-output ports using the at least one real-time communication computer network protocol (1507).

13. The computer-implemented method of claim 12, wherein the identifying of the expressions and the specifications being arguments of the expressions comprises the following step of:
recasting the dependency tree into a new dependency tree, wherein branch fragments of the branches of the dependency tree are recast (801, 1101) to incorporate as nodes expressions being terms of the Boolean expressions of the dependency tree into the new dependency tree, wherein each separate branch fragment is selectively recast in one of DNF and CNF (1101) according to which normal form most reduces the number of Boolean expressions in the each separate branch fragment.

14. The computer-implemented method of claim 13, wherein execution of each of the Boolean expressions in the original dependency tree represented by its respective terms in the respective branch fragment of the new dependency tree is equivalent to execution of said respective terms in said respective branch fragment of the new dependency tree.

15. A computer readable medium having stored thereon a computer executable program code for execution by a computer processor controlling a computing device of a networked in-memory database system, wherein execution of instructions of the executable program code causes the computer processor controlling the computing device to perform the computer-implemented method of claims 12-14 on the networked in-memory database system.

## Patentansprüche

1. Ein vernetztes In-Memory-Datenbanksystem (1400) zur Echtzeitsteuerung von Herstellungsprozessen von kundenspezifischen Produkten unter Verwendung mindestens eines Montagewerkzeugs (1500) mit Echtzeitsteuereinheit (1501), wobei das vernetzte In-Memory-Datenbanksystem umfasst:
eine spaltenorientierte Datenbank (1413), wobei Spezifikationen der für die Herstellung der kundenspezifischen Produkte verwendbaren Komponenten in der spaltenorientierten Datenbank gespeichert sind,
einen oder mehrere erste Ein-/Ausgabeports (1412) zum Programmieren mindestens einer von Echtzeit-Steuerungseinheiten der Montagewerkzeuge, wobei der eine oder die mehreren ersten Ein-/Ausgabeports konfiguriert sind, um mindestens ein Echtzeit-Kommunikationscomputernetzwerkprotokoll zur Kommunikation mit den Echtzeit-Steuerungseinheiten zu unterstützen,
einen oder mehrere zweite Ein-/Ausgangsports (1414), die konfiguriert sind, um mindestens ein sicheres Messaging-Computer-Netzwerkprotokoll zu unterstützen,
ein digitales Speichermedium (1404), das einen prozessorausführbaren Programmcode speichert, und
eine Computervorrichtung (1402) zum Ausführen des prozessorausführbaren Programmcodes, um zu bewirken, dass die Computervorrichtung die folgenden Schritte ausführt:
Empfangen einer Anforderungsnachricht über den zweiten Port unter Verwendung des sicheren Messaging-Computer-Netzwerkprotokolls (1501), wobei die Anforderungsnachricht eine Anforderung zur Herstellung des kundenspezifischen Produkts und dessen Beschreibung umfasst, wobei die Beschreibung Konfigurationen des kundenspezifischen Produkts umfasst, die als ein Abhängigkeitsbaum in einer der disjunktiven Normalformen (DNF) oder konjunktiven Normalformen (CNF) mitgeteilt werden, wobei der Abhängigkeitsbaum boolesche Ausdrücke umfasst, die Auswahlbedingungen für die Komponenten und ihre Spezifikationen beschreiben, , die für die Herstellung des kundenspezifischen Produkts erforderlich sind, wobei Zweige des Abhängigkeitsbaums den verschiedenen Konfigurationen des kundenspezifischen Produkts entsprechen;
Ermitteln von Ausdrücken und der Spezifikationen, die Argumente der Ausdrücke (1502) sind, wobei jeder der Ausdrücke entweder eine der booleschen Ausdrücke oder ein Glied eines der booleschen Ausdrücke ist, wobei jeder der Ausdrücke mindestens einen Operator des jeweiligen Ausdrucks und aller Operanden des mindestens einen Operators umfasst, wobei ein Codefragment des prozessorausführbaren Programmcodes, dessen Ausführung die Computervorrichtung veranlasst, die Schritte des Ermittelns der Ausdrücke auszuführen, ein deklarativer Programmcode ist;
Berechnen von Ergebnissen der Ausdrücke (1503);
Aggregieren der Ergebnisse als einzelne Datentabellenspalte in der spaltenorientierten Datenbank und Aggregieren der Aggregationsergebnisse als weitere einzelne Datentabellenspalten in der spaltenorientierten Datenbank (1504) unter Verwendung einer Minimum-Funktion zur Auswertung eines Ergebnisses in einer AND-Gruppe eines AND-Knotens und einer Maximum-Funktion zur Auswertung eines Ergebnisses in einer OR-Gruppe eines OR-Knotens in einer alternierenden Reihenfolge, die der gewählten Normalform entspricht, wobei boolesche Werte TRUE und FALSE in den Datentabellenspalten als Eins bzw. Null dargestellt werden;
Ermitteln einer Menge der Zweige des Abhängigkeitsbaums (1505), die alle booleschen Ausdrücke in ihren Knoten jedes der Zweige der Menge aufweisen, die gleich TRUE sind;
Extrahieren, aus einem der Zweige der Menge, der Komponenten und ihrer Spezifikationen der Konfiguration, die dem einen der Zweige der Menge (1506) entspricht; und
Programmieren der Echtzeitsteuereinheit von mindestens einem der Montagewerkzeuge, um das kundenspezifische Produkt mit der Konfiguration herzustellen, die der Konfiguration entspricht, die dem einen der Zweige der Menge entspricht, wobei das Programmieren ein Erzeugen von Anweisungen zum Verwenden der extrahierten Komponenten und ihrer Spezifikationen für die Herstellung des kundenspezifischen Produkts umfasst, wobei das Programmieren über einen oder mehrere erste Ein- und Ausgangsports unter Verwendung des mindestens einen Echtzeit-Kommunikationscomputernetzwerkprotokolls (1507) durchgeführt wird.

2. Das vernetzte In-Memory-Datenbanksystem nach Anspruch 1, wobei jede der Konfigurationen einen zugeordneten Präferenzindex der einzelnen Konfigurationen aufweist, wobei der eine der Zweige der Menge der Konfiguration mit dem höchsten Präferenzindex unter anderen Konfigurationen entspricht, wobei die Zweige in dem Satz enthalten sind.

3. Das vernetzte In-Memory-Datenbanksystem nach einem der vorhergehenden Ansprüche, wobei die Ausführung des prozessorausführbaren Programmcodes ferner bewirkt, dass die Computervorrichtung den folgenden Schritt ausführt:
Aktualisieren der spaltenorientierten Datenbank (1500);
wobei die Ausführung des prozessorausführbaren Programmcodes bewirkt, dass die Computervorrichtung die folgenden Schritte ausführt, wenn die ermittelte Menge nicht leer ist (1509): das Extrahieren der Komponenten und ihrer Spezifikationen (1506) und das Programmieren der Echtzeit-Steuereinheit (1507);
wobei die Ausführung des prozessorausführbaren Programmcodes bewirkt, dass die Computervorrichtung die Ausführung der folgenden Schritte nach der Ausführung des Aktualisierens der spaltenorientierten Datenbank (1500) wiederholt, wenn die zuvor identifizierte Menge leer ist (1509): das Ermitteln der Ausdrücke (1502), das Berechnung der Ergebnisse (1503) und das Ermitteln der Menge.

4. Das vernetzte In-Memory-Datenbank-System nach einem der vorhergehenden Ansprüche, wobei eine Anzahl von Operanden in einem der Ausdrücke kleiner als drei ist.

5. Das vernetzte In-Memory-Datenbanksystem nach einem der vorhergehenden Ansprüche, wobei das Identifizieren der Ausdrücke und der Spezifikationen, die die Argumente der Ausdrücke sind, den folgenden Schritt umfasst:
Umformulieren des Abhängigkeitsbaums in einen neuen Abhängigkeitsbaum, wobei Zweigabschnitte der Zweige des Abhängigkeitsbaums umformuliert werden (801, 1101), um Ausdrücke, die Glieder der booleschen Ausdrücke des Abhängigkeitsbaums sind, als Knoten in den neuen Abhängigkeitsbaum aufzunehmen, wobei jeder separate Zweigabschnitt selektiv in ein DNF oder eine CNF (1101) umformuliert wird, je nachdem, welche Normalform die Anzahl der booleschen Ausdrücke in dem jeden separaten Zweigabschnitt am stärksten reduziert.

6. Das vernetzte In-Memory-Datenbanksystem nach Anspruch 5, wobei die Ausführung jedes der booleschen Ausdrücke in dem ursprünglichen Abhängigkeitsbaum, der durch seine jeweiligen Glieder in dem jeweiligen Zweigabschnitt des neuen Abhängigkeitsbaums dargestellt wird, der Ausführung der besagten jeweiligen Glieder in dem jeweiligen Zweigabschnitt des neuen Abhängigkeitsbaums gleichgestellt ist.

7. Das vernetzte In-Memory-Datenbanksystem nach einem der vorhergehenden Ansprüche, wobei die Ausführung des prozessorausführbaren Programmcodes bewirkt, dass die Computervorrichtung gleichzeitig die Berechnung der Ergebnisse der Ausdrücke in den verschiedenen Zweigen und/oder in verschiedenen Abschnitten der Zweige durchführt.

8. Das vernetzte In-Memory-Datenbanksystem nach einem der vorhergehenden Ansprüche, wobei die Ausführung des prozessorausführbaren Programmcodes bewirkt, dass die Computervorrichtung die Ergebnisse in den UND-Gruppen oder OR-Gruppen gleichzeitig auswertet.

9. Das vernetzte In-Memory-Datenbanksystem nach einem der vorhergehenden Ansprüche, wobei jeder der booleschen Ausdrücke des Abhängigkeitsbaums mindestens einen aus einem Nicht-Festwert-Literal, einem Multi-Value-Literal, einer In-List und einer Variantentabelle umfasst.

10. Das vernetzte In-Memory-Datenbanksystem nach einem der vorhergehenden Ansprüche, wobei eine deklarative Programmiersprache des deklarativen Programmiersprache-prozessorausführbaren-Programmcodes eine der folgenden deklarativen Programmiersprachen ist: Resource Description Framework (RDF) Query Description Language (RDQL), SPARQL-Protokoll und RDF-Query Language (SPARQL), Structured Query Language (SQL) oder xBase.

11. Das vernetzte In-Memory-Datenbank-System nach einem der vorhergehenden Ansprüche, wobei die Berechnung der Ergebnisse Folgendes umfasst:
Fortsetzen der Ausführung der Berechnung der Ergebnisse einer der UND-Gruppen, bis eines der berechneten Ergebnisse der einen der UND-Gruppen gleich FALSE ist; und
nach Fortsetzung der Ausführung der Berechnung der Ergebnisse, Zuordnen FALSE jedem der noch nicht berechneten Ergebnisse der einen der UND-Gruppen , wenn alle Ergebnisse der einen der UND-Gruppen noch nicht berechnet werden.

12. Ein Computerimplementiertes Verfahren zur Echtzeitsteuerung von Herstellungsprozessen von kundenspezifischen Produkten unter Verwendung eines vernetzten In-Memory-Datenbanksystems (1400) und mindestens eines Montagewerkzeugs (1500) mit Echtzeitsteuereinheit (1501), wobei das vernetzte In-Memory-Datenbanksystem umfasst:
eine Spaltenorientierte Datenbank (1413), wobei Spezifikationen der für die Herstellung der kundenspezifischen Produkte verwendbaren Komponenten in der Spaltenorientierte Datenbank gespeichert sind,
einen oder mehrere erste Ein-/Ausgabeports (1412) zum Programmieren mindestens einer von Echtzeit-Steuerungseinheiten der Montagewerkzeuge, wobei der eine oder die mehreren ersten Ein-/Ausgabeports konfiguriert sind, um mindestens ein Echtzeit-Kommunikationscomputernetzwerkprotokoll zur Kommunikation mit den Echtzeit-Steuerungseinheiten zu unterstützen,
einen oder mehrere zweite Ein-/Ausgangsports (1414), die konfiguriert sind, um mindestens ein sicheres Messaging-Computer-Netzwerkprotokoll zu unterstützen, ein digitales Speichermedium (1404), das einen prozessorausführbaren Programmcode speichert, und
eine Computervorrichtung (1402) zum Ausführen des prozessorausführbaren Programmcodes, um zu bewirken, dass die Computervorrichtung die folgenden Schritte des computerimplementierten Verfahrens ausführt:
Empfangen einer Anforderungsnachricht über den zweiten Port unter Verwendung des sicheren Messaging-Computer-Netzwerkprotokolls (1501), wobei die Anforderungsnachricht eine Anforderung zur Herstellung des kundenspezifischen Produkts und dessen Beschreibung umfasst, wobei die Beschreibung Konfigurationen des kundenspezifischen Produkts umfasst, die als ein Abhängigkeitsbaum in einer der disjunktiven Normalformen (DNF) oder konjunktiven Normalformen (CNF) mitgeteilt werden, wobei der Abhängigkeitsbaum boolesche Ausdrücke umfasst, die Auswahlbedingungen für die Komponenten und ihre Spezifikationen beschreiben, die für die Herstellung des kundenspezifischen Produkts erforderlich sind, wobei Zweige des Abhängigkeitsbaums den verschiedenen Konfigurationen des kundenspezifischen Produkts entsprechen;
Ermitteln von Ausdrücken und der Spezifikationen, die Argumente der Ausdrücke (1502) sind, wobei jeder der Ausdrücke entweder eine der booleschen Ausdrücke oder ein Glied eines der booleschen Ausdrücke ist, wobei jeder der Glieder mindestens einen Operator des jeweiligen Ausdrucks und aller Operanden des mindestens einen Operators umfasst, wobei ein Codefragment des prozessorausführbaren Programmcodes, dessen Ausführung die Computervorrichtung veranlasst, die Schritte des Ermittelns der Ausdrücke auszuführen, ein deklarativer Programmcode ist;
Berechnen von Ergebnissen der Ausdrücke (1503);
Aggregieren der Ergebnisse als einzelne Datentabellenspalte in der spaltenorientierten -Datenbank und Aggregieren der Aggregationsergebnisse als weitere einzelne Datentabellenspalten in der spaltenorientierten Datenbank (1504) unter Verwendung einer Minimum-Funktion zur Auswertung eines Ergebnisses in einer AND-Gruppe eines AND-Knotens und einer Maximum-Funktion zur Auswertung eines Ergebnisses in einer OR-Gruppe eines OR-Knotens in einer alternierenden Reihenfolge, die der gewählten Normalform entspricht, wobei boolesche Werte TRUE und FALSE in den Datentabellenspalten als Eins bzw. Null dargestellt werden;
Ermitteln einer Menge der Zweige des Abhängigkeitsbaums (1505), die alle booleschen Ausdrücke in ihren Knoten jedes der Zweige der Menge aufweisen, die gleich TRUE sind;
Extrahieren, aus einem der Zweige der Menge, der Komponenten und ihrer Spezifikationen der Konfiguration, die dem einen der Zweige der Menge (1506) entspricht; und
Programmieren der Echtzeitsteuereinheit von mindestens einem der Montagewerkzeuge, um das kundenspezifische Produkt mit der Konfiguration herzustellen, die der Konfiguration entspricht, die dem einen der Zweige der Menge entspricht, wobei das Programmieren ein Erzeugen von Anweisungen zum Verwenden der extrahierten Komponenten und ihrer Spezifikationen für die Herstellung des kundenspezifischen Produkts umfasst, wobei das Programmieren über einen oder mehrere erste Ein- und Ausgangsports unter Verwendung des mindestens einen Echtzeit-Kommunikationscomputernetzwerkprotokolls (1507) durchgeführt wird.

13. Das computerimplementierte Verfahren nach Anspruch 12, wobei das Ermitteln der Ausdrücke und der Spezifikationen, die Argumente der Ausdrücke sind, den folgenden Schritt umfasst:
Umformulieren des Abhängigkeitsbaums in einen neuen Abhängigkeitsbaum, wobei Zweigabschnitte der Zweige des Abhängigkeitsbaums umformuliert (801, 1101), um Ausdrücke, die Glieder der booleschen Ausdrücke des Abhängigkeitsbaums sind, als Knoten in den neuen Abhängigkeitsbaum aufzunehmen, wobei jeder separate Zweigabschnitt selektiv in eine DNF oder eine CNF (1101) umformuliert wird, je nachdem, welche Normalform die Anzahl der booleschen Ausdrücke in dem jeden separaten Zweigabschnitt am stärksten reduziert.

14. Das computerimplementierte Verfahren nach Anspruch 13, wobei die Ausführung jedes der booleschen Ausdrücke in dem ursprünglichen Abhängigkeitsbaum, der durch seine jeweiligen Glieder in dem jeweiligen Zweigabschnitt des neuen Abhängigkeitsbaums dargestellt wird, der Ausführung der besagten jeweiligen Glieder in dem jeweiligen Zweigabschnitt des neuen Abhängigkeitsbaums gleichgestellt ist.

15. Computerlesbares Medium, auf dem ein computerausführbarer Programmcode zur Ausführung durch einen Computerprozessor gespeichert ist, der eine Computervorrichtung eines vernetzten In-Memory-Datenbanksystems steuert, wobei die Ausführung von Anweisungen des ausführbaren Programmcodes bewirkt, dass der Computerprozessor, der die Computervorrichtung steuert, das computerimplementierte Verfahren der Ansprüche 12-14 auf dem vernetzten In-Memory-Datenbank-system durchführt.

## Revendications

1. Système de base de données en mémoire en réseau (1400) pour la commande en temps réel de processus de fabrication de produits personnalisés en utilisant au moins un outil d'assemblage (1500) ayant une unité de commande en temps réel (1501, le système de base de données en mémoire en réseau comprenant :
une base de données de stockage en colonnes (1413), où des spécifications des composants utilisables pour la fabrication des produits personnalisés sont stockés dans la base de données de stockage en colonnes,
un ou plusieurs premiers ports entrée-sortie (1412) pour la programmation d'au moins une des unités de commande en temps réel des outils d'assemblage, le ou les premiers ports entrée-sortie étant configurés pour prendre en charge au moins un protocole de réseau d'ordinateur de communication en temps réel pour la communication avec des unités de commande en temps réel,
un ou plusieurs seconds ports entrée-sortie (1414) configurés pour prendre en charge au moins un protocole de réseau d'ordinateur de messagerie sécurisée,
un support de stockage numérique (1404) stockant un code de programme exécutable par un processeur, et
un dispositif informatique (1402) pour exécuter le code de programme exécutable par un processeur afin de faire en sorte que le dispositif informatique exécute les étapes suivantes :
de réception d'un message de demande par le biais du second port en utilisant le protocole de réseau d'ordinateur de messagerie sécurisée (1501), le message de demande comprenant une demande pour fabriquer le produit personnalisé et sa description, la description comprenant des configurations dudit produit personnalisé signalées sous forme d'un arbre de dépendance comprenant des expressions booléennes décrivant des conditions de sélection pour les composants et leurs spécifications nécessaires pour fabriquer ledit produit personnalisé dans une forme parmi une forme normale disjonctive (DNF) ou une forme normale conjonctive (CNF), où des ramifications de l'arbre de dépendance correspondent aux configurations variées dudit produit personnalisé ;
d'identification d'expressions et des spécifications étant des arguments des expressions (1502), où chacune des expressions est, soit une des expressions booléennes, soit un terme d'une des expressions booléennes, où chacun des termes comprend au moins un opérateur de chacun des termes et tous les opérants de l'au moins un opérateur, où un fragment de code du code de programme exécutable par un processeur dont l'exécution fait en sorte que le dispositif informatique exécute les étapes de l'identification des expressions est un code de programme exécutable par un processeur de langage de programmation déclarative ;
de calcul des résultats des expressions (1503) ;
d'agrégation des résultats sous forme d'une colonne de tableau de données unique dans la base de données de stockage en colonne et d'agrégation des résultats d'agrégation sous forme de nouvelles colonnes de tableau de données uniques dans la base de données de stockage en colonnes (1504), en utilisant une fonction de minimum pour l'évaluation d'un résultat dans un groupe ET d'un noeud ET et une fonction de maximum pour l'évaluation d'un résultat dans un groupe OU d'un noeud OU dans une séquence alternative classée en correspondance avec la forme normale choisie, où des valeurs booléennes VRAI et FAUX sont représentées dans les colonnes de tableau de données sous forme de un et de zéro respectivement ;
d'identification d'un ensemble de ramifications de l'arbre de dépendance (1505) qui ont toutes des expressions booléennes dans leurs noeuds de chacune des ramifications de l'ensemble étant égales à VRAI ;
d'extraction à partir d'une des ramifications de l'ensemble des composants et de leurs spécifications de la configuration correspondant à la ramification parmi les ramifications de l'ensemble (1506)) ; et
de programmation de l'unité de commande en temps réel d'au moins un des outils d'assemblage pour fabriquer ledit produit personnalisé ayant la configuration correspondant à la ramification parmi les ramifications de l'ensemble, où la programmation comprend la génération d'instructions pour utiliser les composants extraits et leurs spécifications pour la fabrication dudit produit personnalisé, où la programmation est effectuée par le biais d'un ou de plusieurs premiers ports d'entrée-sortie en utilisant l'au moins un protocole de réseau d'ordinateur de communication en temps réel (1507).

2. Système de base de données en mémoire en réseau selon la revendication 1, dans lequel chacune des configurations a un indice de préférence associé de chacune des configurations, où la ramification parmi les ramifications de l'ensemble correspond à la configuration ayant l'indice de préférence le plus élevé parmi les autres configurations dont les ramifications sont comprises dans l'ensemble.

3. Système de base de données en mémoire en réseau selon l'une quelconque des revendications précédentes, dans lequel l'exécution du code de programme exécutable par un processeur fait que le dispositif informatique procède en outre à l'exécution de l'étape suivante :
de mise à jour de la base de données de stockage en colonnes (1500) ;
où l'exécution du code de programme exécutable par un processeur fait en sorte que le dispositif informatique exécute les étapes suivantes si l'ensemble identifié n'est pas vide (1509) :
l'extraction des composants et de leurs spécifications (1506) et la programmation de l'unité de commande (1507) en temps réel ;
où l'exécution du code de programme exécutable par un processeur fait en sorte que le dispositif informatique répète l'exécution des étapes suivantes après l'exécution de la mise à jour de la base de données de stockage en colonnes (1500) si l'ensemble identifié précédemment est vide (1509) : l'identification des expressions (1502), le calcul des résultats (1503) et l'identification de l'ensemble.

4. Système de base de données en mémoire en réseau selon l'une quelconque des revendications précédentes, dans lequel un nombre d'opérants dans l'une quelconque des expressions est inférieur à trois.

5. Système de base de données en mémoire en réseau selon l'une quelconque des revendications précédentes, dans lequel l'identification des expressions et des spécifications étant les arguments des expressions comprend l'étape suivante :
de remaniement de l'arbre de dépendance en un nouvel arbre de dépendance, où des fragments de ramification des ramifications de l'arbre de dépendance sont remaniés (801, 1101) pour s'incorporer en tant qu'expressions de noeuds étant des termes des expressions booléennes de l'arbre de dépendance dans le nouvel arbre de dépendance, où chaque fragment de ramification séparé est remanié sélectivement en une forme normale parmi une DNF et une CNF (1101), laquelle forme normale réduit le plus le nombre d'expressions booléennes dans chaque fragment de ramification séparé.

6. Système de base de données en mémoire en réseau selon la revendication 5, dans lequel l'exécution de chacune des expressions booléennes dans l'arbre de dépendance d'origine représentée par ses termes respectifs dans le fragment de ramification respectif du nouvel arbre de dépendance est équivalente à une exécution desdits termes respectifs dans ledit fragment de ramification du nouvel arbre de dépendance.

7. Système de base de données en mémoire en réseau selon l'une quelconque des revendications précédentes, dans lequel l'exécution du code de programme exécutable par un processeur fait en sorte que le dispositif informatique exécute simultanément le calcul des résultats des expressions dans les différentes ramifications et/ou dans différents fragments des ramifications.

8. Système de base de données en mémoire en réseau selon l'une quelconque des revendications précédentes, dans lequel l'exécution du code de programme exécutable par un processeur fait en sorte que le dispositif informatique évalue les résultats dans des groupes ET ou des groupes OU simultanément.

9. Système de base de données en mémoire en réseau selon l'une quelconque des revendications précédentes, dans lequel chacune parmi certaines expressions booléennes de l'arbre de dépendance comprend au moins une valeur littérale non fixée, une valeur littérale multiple, une fonction inlist, et un tableau de variantes.

10. Système de base de données en mémoire en réseau selon l'une quelconque des revendications précédentes, dans lequel un langage de programmation déclarative du code de programme exécutable par un processeur de langage de programmation déclarative est l'un des langages de programmation déclarative suivants : un langage de requête (RDQL) de Resource Description Framework (RDF), un protocole SPARQL et un langage de requête (SPARQL) de RDF, un langage de requête structuré (SQL) ou un langage xBase.

11. Système de base de données en mémoire en réseau selon l'une quelconque des revendications précédentes, dans lequel le calcul des résultats comprend ce qui suit :
la poursuite de l'exécution du calcul des résultats de l'un des groupes ET jusqu'à ce que l'un des résultats calculés de l'un des groupes ET soit égal à FAUX ; et
après la poursuite de l'exécution du calcul des résultats et si tous les résultats de l'un des groupes ET sont calculés en associant encore FAUX à chacun des résultats non encore calculés de l'un des groupes ET.

12. Procédé mis en oeuvre par ordinateur pour une commande en temps réel d'un processus de fabrication de produits personnalisés en utilisant un système de base de données en mémoire en réseau (1400) et au moins un outil d'assemblage (1500) ayant une unité de commande (1501) en temps réel, le système de base de données en mémoire en réseau comprenant :
une base de données de stockage en colonnes (1413), où des spécifications des composants utilisables pour la fabrication de produits personnalisés sont stockés dans la base de données de stockage en colonnes,
un ou plusieurs premiers ports entrée-sortie (1412) pour la programmation d'au moins une des unités de commande en temps réel des outils d'assemblage, le ou les premiers ports entrée-sortie étant configurés pour prendre en charge au moins un protocole de réseau d'ordinateur de communication en temps réel pour la communication avec des unités de commande en temps réel,
un ou plusieurs seconds ports entrée-sortie (1414) configurés pour prendre en charge au moins un protocole de réseau d'ordinateur de messagerie sécurisée,
un support de stockage numérique (1404) stockant un code de programme exécutable par un processeur, et
un dispositif informatique (1402) pour exécuter le code de programme exécutable par un processeur afin de faire en sorte que le dispositif informatique exécute les étapes suivantes du procédé mis en oeuvre par ordinateur :
la réception d'un message de demande par le biais du second port en utilisant le protocole de réseau d'ordinateur de messagerie sécurisé (1501), le message de demande comprenant une demande pour fabriquer le produit personnalisé et sa description, la description comprenant des configurations dudit produit personnalisé signalées sous forme d'un arbre de dépendance comprenant des expressions booléennes décrivant des conditions de sélection pour les composants et leurs spécifications nécessaires pour fabriquer ledit produit personnalisé dans une forme parmi une forme normale disjonctive (DNF) ou une forme normale conjonctive (CNF), où des ramifications de l'arbre de dépendance correspondent aux configurations variées dudit produit personnalisé ;
l'identification d'expressions et des spécifications étant des arguments des expressions (1502), où chacune des expressions est, soit une des expressions booléennes, soit un terme d'une des expressions booléennes, où chacun des termes comprend au moins un opérateur de chacun des termes et tous les opérants de l'au moins un opérateur, où un fragment de code du code de programme exécutable par un processeur dont l'exécution fait en sorte que le dispositif informatique exécute les étapes de l'identification des expressions est un code de programme exécutable par un processeur de langage de programmation déclarative ;
le calcul des résultats des expressions (1503) ;
l'agrégation des résultats sous forme d'une colonne de tableau de données unique dans la base de données de stockage en colonnes et l'agrégation des résultats d'agrégation sous forme de nouvelles colonnes de tableau de données uniques dans la base de données de stockage en colonnes (1504), en utilisant une fonction de minimum pour l'évaluation d'un résultat dans un groupe ET d'un noeud ET et une fonction de maximum pour l'évaluation d'un résultat dans un groupe OU d'un noeud OU dans une séquence alternative classée en correspondance avec la forme normale choisie, où des valeurs booléennes VRAI et FAUX sont représentées dans les colonnes de tableau de données sous forme de un et de zéro respectivement ;
l'identification d'un ensemble de ramifications de l'arbre de dépendance (1505) qui ont toutes des expressions booléennes dans leurs noeuds de chacune des ramifications de l'ensemble étant égales à VRAI ;
l'extraction à partir d'une des ramifications de l'ensemble des composants et des leurs spécifications de la configuration correspondant à la ramification parmi les ramifications de l'ensemble (1506)) ; et
la programmation de l'unité de commande en temps réel d'au moins un des outils d'assemblage pour fabriquer ledit produit personnalisé ayant la configuration correspondant à la ramification parmi les ramifications de l'ensemble, où la programmation comprend la génération d'instructions pour utiliser les composants extraits et leurs spécifications pour la fabrication dudit produit personnalisé, où la programmation est effectuée par le biais d'un ou de plusieurs premiers ports d'entrée-sortie en utilisant l'au moins un protocole de réseau d'ordinateur de communication en temps réel (1507).

13. Procédé mis en oeuvre par ordinateur selon la revendication 12, dans lequel l'identification des expressions et des spécifications étant des arguments des expressions comprend l'étape suivante :
de remaniement de l'arbre de dépendance en un nouvel arbre de dépendance, où des fragments de ramification des ramifications de l'arbre de dépendance sont remaniés (801, 1101) pour s'incorporer en tant qu'expressions de noeuds étant des termes des expressions booléennes de l'arbre de dépendance dans le nouvel arbre de dépendance, où chaque fragment de ramification séparé est remanié sélectivement en une forme normale parmi une DNF et une CNF (1101), laquelle forme normale réduit le plus le nombre d'expressions booléennes dans chaque fragment de ramification séparé.

14. Procédé mis en oeuvre par ordinateur selon la revendication 13, dans lequel l'exécution des expressions booléennes dans l'arbre de dépendance d'origine représenté par ses termes respectifs dans le fragment de ramification respectif du nouvel arbre de dépendance est équivalente à l'exécution desdits termes respectifs dans ledit fragment de ramification respectif du nouvel arbre de dépendance.

15. Support lisible par ordinateur ayant un code de programme exécutable par ordinateur y étant stocké pour l'exécution par un processeur informatique commandant un dispositif informatique d'un système de base de données en mémoire en réseau, où l'exécution d'instructions du code de programme exécutable fait en sorte que le processeur informatique commandant le dispositif informatique exécute le procédé mis en oeuvre par ordinateur selon les revendications 12 à 14 sur le système de base de données en mémoire en réseau.
